# EUROPEAN PATENT APPLICATION

(11) **EP 2 111 961 A1**
(43) Date of publication of application: **28.10.2009**
(21) Application number: 08154874.5
(22) Date of filing: 21.04.2008
(51) Int. Cl.: B29C 41/04, B32B 5/20, B32B 27/32

(54) **Leisure articles and cars prepared by multilayer rotational moulding.**

(71) Applicant: Total Petrochemicals Research Feluy, 7181 Seneffe (Feluy) (BE)
(72) Inventor: Maziers, Eric, B - 7180, Seneffe (BE)

(57) **Abstract**

This invention relates to the field of multilayer articles having reinforced structural properties prepared by rotational moulding wherein the external and internal skin layers are prepared from polyethylene resin and the intermediate layer is prepared from foamed polyethylene.

## Description

This invention relates to the field of multilayer rotomoulded articles having reinforced structural properies.

Polyethylene represents more than 80 % of the polymers used in the rotomoulding market. This is due to the outstanding resistance of polyethylene to thermal degradation during processing, to its easy grinding, good flowability, and low temperature impact properties.

Rotomoulding is used for the manufacture of simple to complex, hollow plastic products. It can be used to mould a variety of materials such as polyethylene, polypropylene, polycarbonate polyamide, or polyvinyl chloride (PVC). Linear low density polyethylene is preferably used as disclosed for example in "Some new results on rotational molding of metallocene polyethylenes" by D. Annechini, E. Takacs and J. Vlachopoulos in ANTEC, vol. 1, 2001.

Polyethylenes prepared with a Ziegler-Natta catalyst are generally used in rotomoulding, but metallocene-produced polyethylenes are desirable, because their narrow molecular distribution allows better impact properties and shorter cycle time in processing.

The metallocene-produced polyethylenes of the prior art (see ANTEC, vol. 1, 2001) suffer from high shrinkage and warpage and for some applications from their whiteness in their natural state.

Plastoelastomeric compositions such as described in US-5,457,159 can also be used in rotomoulding, but they require complex processing steps of mixing and vulcanisation.

US-6,124,400 discloses the use for rotomoulding of polymer alloys containing semicrystalline polyolefin sequences with chains of different controlled microstructure prepared in a "one-pot" polymerisation process from a single monomer. The polymerisation of these polymer alloys requires a complex catalyst system comprising organometallic catalyst precursors, cationic forming cocatalysts and cross-over agents.

It is thus desired to produce articles prepared with two or more layers of similar or dissimilar material in order to improve the final properties of the finished product. It is however generally necessary to add a bonding layer or cross-linking in order to insure structural integrity.

There is thus a need to produce rotomoulded multilayer articles that do not suffer from these drawbacks.

It is an aim of the present invention to prepare multilayer rotomoulded leisure articles or cars having good adherence between layers of dissimilar material.

It is also an aim of the present invention to prepare multilayer rotomoulded articles wherein one of the layer is foamed polyethylene.

It is another aim of the present invention to prepare large multilayer rotomoulded articles that can be processed easily and quickly.

It is a further aim of the present invention to prepare large multilayer rotomoulded articles having good stiffness and rigidity.

It is yet another aim of the present invention to prepare large multilayer rotomoulded articles having controlled wall thickness.

It is also an aim of the present invention to prepare large multilayer rotomoulded articles having controlled foam thickness.

Any one of these aims is at least partially fulfilled by the present invention.

Accordingly, the present invention discloses multilayer rotomoulded articles having reinforced structural properies comprising:
a) an external skin layer that is a polyethylene-based layer prepared from a composition consisting of
   - from 40 to 99 wt% of a metallocene-prepared homo- or co-polymer of ethylene or a mixture thereof, based on the weight of skin layer a) composition;
   - from 1 to 60 wt% of a functionalised polyolefin (FPO) or of an ionomer or of a polyolefin (PO) grafted to a non-polyolefin (NPO) in the form of a block copolymer (PO)g-NPO), or of a mixture thereof;
b) an intermediate foamed polyethylene layer wherein the polyethylene resin may be the same as or different from that of skin layer a);
c) a internal skin layer that is a polyethylene-based layer prepared from a composition consisting of
   - from 40 to 100 wt% of a metallocene-prepared homo- or co-polymer of ethylene or a mixture thereof, based on the weight of skin layer b) composition, said polyethylene being the same as or different from that of external skin layer a);
   - from 0 to 60 wt% of a functionalised polyolefin (FPO) or of an ionomer or of a polyolefin (PO) grafted to a non-polyolefin (NPO) in the form of a block copolymer (PO)g-NPO), or of a mixture thereof;
d) optional layers.

Additional layers may be added in order to obtain desired properties such as for example barrier properties or good impact at low temperature. These additional layers are preferably prepared from polyamide or ethylene/vinyl alcohol polymers (EVOH).

External skin layer a) preferably comprises homopolymers or copolymers of ethylene and a functionalised polyethylene or ionomer. In this description, copolymers are prepared from one monomer and one or more comonomers.

In a preferred embodiment according to the present invention, the composition of external skin layer a) comprises from 70 to 99 wt%, based on the weight of skin layer a) composition, and more preferably from 80 to 98 wt% of polyethylene, and preferably from 1 to 30 wt% and more preferably from 2 to 20 wt% of functionalised polyethylene or ionomer.

Preferably, the composition of internal skin layer b) comprises from 90 to 100 wt%, based on the weight of skin layer b) composition and more preferably about 100 wt% of polyethylene, and preferably from 0 to 10 wt% and more preferably 0 wt% of functionalised polyethylene or ionomer.

The functionalised polyolefins, if present are polyolefins grafted with a material that provides polarity and/or reactivity and they therefore depend upon the nature of the adjacent layers. Preferably in the present invention, the polyolefins are grafted with anhydride and preferably, the polyolefin is polyethylene or polypropylene, more preferably, it is polyethylene. Alternatively, the functionalised polyolefin is an ionomer. Grafted polyethylene provides excellent adhesion properties whereas ionomers enhance mechanical properties. In a more preferred embodiment according to the present invention, the functionalised polyolefin is a mixture of ionomer and grafted polyethylene.

The preferred polyethylene according to the present invention is a homo- or co-polymer of ethylene produced with a catalyst comprising a metallocene on a silica/aluminoxane support. More preferably, the metallocene component is ethylene-bis-tetrahydroindenyl zirconium dichloride or dimethylsilylene-bis(2-methyl-4-phenyl-indenyl) zirconium dichloride. The most preferred metallocene component is ethylene-bis-tetrahydroindenyl zirconium dichloride.

The melt index of the polyethylene resin preferably used in the present invention is typically at least equal to 0.5 dg/min, preferably of at least 1 dg/min. It is preferably at most equal to 25 dg/min, preferably of at most 20 dg/min. The melt flow index MI2 is measured following the method of standard test ASTM D 1283 at a temperature of 190°C and a load of 2.16 kg.

The homo- and co-polymers of ethylene that can be used in the present invention preferably have a density of at least 0.920 g/cc, preferably of at least 0.930 g/cc. It is of at most 0.965 g/cc, preferably of at most 0.960 g/cc. The density is measured following the method of standard test ASTM D 1505 at 23°C.

The polyethylene of the present invention may also have a bi- or multimodal molecular weight distribution, i.e. they may be a blend of two or more polyethylenes with different molecular weight distributions, which can be blended either physically or chemically, i.e. produced sequentially in two or more reactors.

The polydispersity D of the polyethylene suitable for the present invention is in the range 2 to 20, preferably 2 to 15, more preferably less than or equal to 10, and most preferably less than or equal to 6, the latter range being typically associated with the preferred metallocene-prepared polyethylene resins. The polydispersity index D is defined as the ratio Mw/Mn of the weight average molecular weight Mw over the number average molecular weight Mn.

The resins of the present invention may also comprise other additives such as for example antioxidants, acid scavengers, antistatic additives, fillers, slip additives or anti-blocking additives , processing aid.

The fooamed polyethylene layer is prepared by standard techniques with chemical blowing agents.

The composition may be prepared by extruding the polyolefin either with a masterbatch comprising the foaming agent or directly with the foaming agent. Alternatively, and preferably, the polyethylene particles are dry blended with the chemical blowing agent and introduced directly into the mould during the rotomoulding cycle.

In order to foam polyethylene a blowing agent must fulfill several requirements:
- the decomposition temperature of the blowing agent is compatible with the processing temperature of the polymer;
- the liberation of the blowing gas occurs within a defined temperature range of about 10 °C and is controllable during the process;
- the decomposition is not autocatalysed in order to avoid overheating;
- the blowing gas is chemically inert, such as preferably nitrogen, carbon dioxide and water;
- the chemical blowing agent is homogeneously and easily incorporated in and compatible with polyethylene.

During foaming process, at elevated temperatures, chemical blowing agents undergo chemical reactions, mostly decomposition, that liberate the blowing gas, typically N₂, CO, CO₂, NH₃ and water.

The chemical agents that can be used in the present invention can function according to three main processes:
1. Irreversible reaction: AB --> C + gas. They can be selected from the group consisting of azo compounds, hydrazine derivatives, semicarbazides, tetrazoles and nitroso compounds.
2. Equilibrium reactions: AB <---> C + gas. They can be selected from the group consisting of bicarbonates and carbonates.
3. Combination of compounds that liberate gasses as a result of their chemical interactions: A + BG --> AB + gas.

The blowing agents can be:
- exothermic such as for example azodicarbonamide (AZ) or 4,4'-oxy-bis(benzenesulfonylhydrazide) (OB); or
- endothermic such as for example sodium bicarbonate (SB).

Azo compounds such as for example azodicarbonamide decompose at a temperature of from 160 to 215 °C and liberate about 220 ml/g of gas, mostly N₂, CO, CO₂, NH₃ and water.

Hydrazides such as for example or 4,4'-oxy-bis(benzenesulfonylhydrazide). It decomposes at a temperature of from 140 to 160 °C and liberates 120 to 140 ml/g of gas, mostly N₂ and H₂O. This type of agent is particularly preferred as it is exothermic and releases only neutral gases.

Carbonates such as for example NaHCO₃ in combination with citric acid. It decomposes at a temperature of from 150 to 230 °C and liberates 140 to 230 ml/g of gas, mostly CO₂ and H₂O.

The amount of blowing agent is of at least 0.2 wt% based on the total weight of the foamed polyethylene composition of the intermediate layer, preferably of at least 1 wt%. It is of at most 5 wt%, preferably of at most 3 wt%. The most preferred amount is of about 2.5 wt%.

The exothermic agents have a much higher decomposition rate than the endothermic agents.

Multiple layers object can be prepared either by manual introduction of material during the moulding cycle, or by the use of a drop-box, or by a one-shot system.

Manual addition involves moving the mould from the oven, removing a vent tube or plug that creates an opening in the part and adding more material using a fennel or wand. This operation must be repeated for each additional layer.

A drop-box typically contains a single material layer and it is an insulated container that holds material until it is released at the appropriate time during the cycle. The signal for release of material is usually transmitted as a pressure pulse via the airline through the arm of the machine. The insulation must be kept cool to prevent the material inside the box from melting.

In either method, there are two critical factors:
- the temperature at which the subsequent layer is added: it is critical for determining the wall thickness of the previous skin formed and how well the two layers may be bound together;
- the time elapsed before addition of the subsequent layer of material: if the mould is at rest for too long, material that has already adhered to the wall may sag.

It is possible to reduce these problems by lowering the melt index of the first layer and/or by reducing the injection temperature of the next layer, and/or by cooling the mould slightly before injection or the next layer.

The cycle time necessary to produce multilayer rotomoulded articles depends upon the number of layers and upon the mass injected for each layer.

The present invention also discloses a method for preparing the multilayer articles of any one of claims 1 to 7 that comprises the steps of:
i) feeding the composition of external skin layer a);
ii) feeding the the composition of the foamed intermediate layer as a dry blend of polethylene and chemical blowing agent;
iii) feeding the composition of internal skin layer c);
iv) optionally feeding desired additional layers.

Alternatively, the chemical blowing agent can be introduced during the rotomoulding cycle by a teflon tube.

The first key point in the process is the time at which the temperature inside the mould reaches the melting temperature of the external polyethylene skin layer. The intermediate layer comprising polyethylene and foaming agent is injected as soon as or just before that first melting temperature is reached.

The second key point in the process is the time at which the temperature inside the mould reaches the melting temperature of the polyethylene/foaming agent composition. The internal polyethylene skin layer is injected as soon as or just before that second melting temperature is reached.

Preferably, the intermediate layer comprising polyethylene and foaming agent is injected between 4 and 7 minutes before the first melting temperature is reached.

Preferably, the internal polyethylene skin layer is injected between 10 and 20 minutes before the second melting temperature is reached.

Typically, the oven temperature is of from 280 to 300 °C. The temperature inside the mould must be compatible with the foaming temperature and is preferably of the order of 160 °C.

The mould is typically cooled by cold air.

This invention is particularly suitable for preparing articles that demand stiff and rigid walls such as for example boats and kayaks of from 4 to 10 m long, or the body of small to medium size cars, or large fuel tanks. The intermediate layer prepared with foamed polyethylene allows the preparation of thick-walled, light-weight articles. The finished articles are characterised by high impact resistance and good thermal and sound insulation.

The thickness of each layer is determined by the size of the final product, by the desired properties and by the cost: it can vary from 0.5 mm up to several cm. In the present invention directed primarily to leisure boats, kayaks and cars' bodies, the external skin layer has a thickess of from 1.5 to 3 mm, the intermediate foamed layer has a thickness of a from 9 to 15 mm and the internal skin layer has a thickness of from 0.5 to 2.5 mm.

The resulting articles are characterised by an excellent stiffness.

### Examples.

A three layer rotomoulded article was prepared as follows.
- the internal skin layer was prepared with a metallocene-produced polyethylene sold by Total Petrochemicals under the name M3583 UV®. It has a density of 0.934 g/cc and a melt index MI2 of 8 dg/min.
- the intermediate foamed polyethylene layer was prepared from a composition of 97.5 wt% of a metallocene-prepared polyethylene resin, comprising functionalised polyolefin and ionomer, sold by Total Petrochemicals under the name M3670® and 2.5 wt% of chemical blowing agent sold by Lanxess Distribution GmbH under the nameGenitron OB®.
- the external skin layer was prepared from a composition of 50 wt% of M3583 UV® and 50 wt% of M3670®.

The finished rotomoulded article ad an internal skin layer of 1 to 2 mm, an intermediate foamed layer of 10 to 12 mm and an external skin layer of 2 to 4 mm.

## Claims

1. Multilayer rotomoulded articles having reinforced structural properies comprising:
a) an external skin layer, that is a polyethylene-based layer, prepared from a composition comprising:
- from 40 to 99 wt% of a metallocene-prepared homo- or co-polymer of ethylene or a mixture thereof, based on the weight of skin layer a) composition;
- from 1 to 60 wt% of a functionalised polyolefin (FPO) or of an ionomer or of a polyolefin (PO) grafted to a non-polyolefin (NPO) in the form of a block copolymer (PO)g-NPO), or of a mixture thereof
b) an intermediate foamed polyethylene layer wherein the polyethylene resin may be the same as or different from that of skin layer a)
c) a internal skin layer, that is a polyethylene-based laye, prepared from a composition consisting of
- from 40 to 100 wt% of a metallocene-prepared homo- or co-polymer of ethylene or a mixture thereof, based on the weight of skin layer b) composition, said polyethylene being the same as or different from that of external skin layer a);
- from 0 to 60 wt% of a functionalised polyolefin (FPO) or of an ionomer or of a polyolefin (PO) grafted to a non-polyolefin (NPO) in the form of a block copolymer (PO)g-(NPO), or of a mixture thereof;
d) optional layers.

2. The rotomoulded article of claim 1 wherein the functionalised polyolefin is functionalised polyethylene.

3. The rotomoulded article of claim 1 or claim 2 wherein the external skin layer composition comprises from 80 to 98 wt% of polyethylene and from 2 to 20 wt % of functionalised polyethylene, or ionomer or a combination thereof.

4. The rotomoulded article of any one of claims 1 to 3 wherein the external skin layer contains 100 wt% polyethylene.

5. The rotomoulded article of any one of the preceding claims wherein the intermediate foamed layer comprises from 0.5 to 5 wt% of chemical blowing agent, based on the weight of the intermediate foamed layer.

6. The rotomoulded article of any one of the preceding claims wherein the chemical blowing agent is selected from exothermic agents selected from azodicarbonamide (AZ) or 4,4'-oxy-bis(benzenesulfonylhydrazide) (OB) or from endothermic agents selected from sodium bicarbonate (SB).

7. The rotomoulded article of any one of the preceding claims wherein typical wall thicknesses are respectively of:
- from 1.5 to 3 mm for the external skin layer;
- from 9 to 15 mm for the intermediate foamed layer;
- from 0.5 to 2.5 mm for the internal skin layer.

8. A method for preparing the multilayer articles of any one of claims 1 to 7 that comprises the steps of:
i) feeding the composition of external skin layer a);
ii) feeding the the composition of the foamed intermediate layer as a dry blend of polethylene and chemical blowing agent;
iii) feeding the composition of internal skin layer c);
iv) optionally feeding desired additional layers.

9. Leisure boats and kayaks prepared by the method of claim 8.

10. City cars prepared by the method of claim 8.

11. Large tanks prepared by the method of claim 8.
